# EUROPÄISCHE PATENTSCHRIFT

(11) **EP 3 572 840 B1**
(45) Veröffentlichungstag und Bekanntmachung des Hinweises auf die Patenterteilung: **24.09.2025**
(21) Anmeldenummer: 19168463.8
(22) Anmeldetag: 10.04.2019
(51) Int. Cl.: G01S 13/42, G01S 7/00, G01S 7/41, G01S 13/88, G01S 13/87, F41H 11/136, H04B 7/00, G08G 1/00, G01S 13/931, G05D 1/00, G01S 13/02, F41H 11/32

(54) **UNBEMANNTES FÜHRUNGSFAHRZEUG MIT EINEM BODENRADAR**
UNMANNED GUIDE VEHICLE WITH A GROUNDBASED RADAR
VÉHICULE SANS PILOTE DE GUIDAGE DOTÉ D'UN RADAR AU SOL

(30) Priorität: 23.05.2018 DE 102018112376
(43) Veröffentlichungstag der Anmeldung: 27.11.2019
(73) Patentinhaber: Rheinmetall Air Defence AG, 8050 Zürich (CH)
(72) Erfinder: Fonrobert, Benno, 8046 Zürich (CH); Urban, Alexej, 8050 Zürich (CH)
(74) Vertreter: Kirschner, Sebastian

(56) Entgegenhaltungen:
- WO-A1-2012/037680
- US-A- 5 592 170
- US-A1- 2009 079 839
- US-A1- 2010 256 835
- US-A1- 2012 062 407

## Beschreibung

Die Erfindung betrifft ein unbemanntes Fahrzeug mit den Merkmalen des unabhängigen Patentanspruchs.

Das Gebiet der Erfindung betrifft insbesondere die sichere Navigation durch ein Minenfeld.

Aus der gattungsbildenden US 2014/0121964 A1 ist ein unbemanntes, selbstfahrendes Fahrzeug mit einem Bodenradar bekannt, dass zur Fahrzeugnavigation dient. Hierbei werden zunächst entlang einer Straße oder einer Fahrstrecke im Gelände Bodenaufnahmen mit dem Bodenradar aufgezeichnet. Wenn nun ein Fahrzeug mit einem Bodenradarsensor ausgerüstet ist, werden die danach auch in diesen Bodenradarsensor aufgenommenen Bilder mit bereits aufgenommenen Daten verglichen und so die Position des Fahrzeugs bestimmt. Das Fahrzeug kann ein selbstfahrendes Fahrzeug sein.

Aus der WO 2012/037680 A1 ist ein Radarsystem mit integrierter Kommunikationsfunktionalität bekannt. Das Radarsystem weist eine Sendeeinheit zum Senden von Radarsignalen auf. Ein erster Modulator versieht das ausgestrahlte Radarsignal mit einer periodischen Wellenform. Die periodische Wellenform weist einen ansteigenden Bereich, einen abfallenden Bereich und einen konstanten Frequenzbereich auf. Ein zweiter Modulator moduliert den konstanten Frequenzbereich mit einem Datensignal. Dieses Datensignal kann von einem Empfänger dekodiert werden.

Aus der DE 10 2012 212 681 A1 ist eine autonome Konvoitechnik für Fahrzeuge bekannt. Bei dem Verfahren wird ein Führungsfahrzeug mit mindestens einem Folgefahrzeug eingesetzt, wobei das Führungsfahrzeug mit dem Folgefahrzeug in Kommunikation steht. Das mindestens eine Folgefahrzeug empfängt eine Kommunikation in Bezug auf eine Zielversatzposition und Routendaten. Die Routendaten werden mit Nachführungsdaten zum Identifizieren einer Genauigkeit zwischen den Routendaten relativ zu den Nachführungsdaten verglichen. Die Routendaten umfassen eine globale Position und GPS-Daten des Führungsfahrzeugs.

Aus der DE 10 2010 045 084 A1 ist ein kombinierter Bodenradar mit einem Metalldetektor zur Detektion von im Boden befindlichen Körpern metallischer und auch nicht metallischer Art, insbesondere von Landminen und/oder Sprengsätze oder dergleichen bekannt. Diese Baugruppe kann an einem Fahrzeug angebracht werden.

Aus der US 2009 / 079 839 A1 ist ein Konvoi mit einem Führungsfahrzeug und mehreren autonomen Folgefahrzeugen bekannt. Die Fahrzeuge weisen ein LIDAR-System und Radarantennen zur Erfassung der Umgebung auf. Die Lidar-Radarantennen sind in Höhe einer Fahrerkabine der Fahrzeuge angeordnet. Die Daten sind zwischen dem Führungsfahrzeug und den Folgefahrzeugen übertragbar.

Aus der US 5 592 170 A ist ein Fahrzeug mit einem Radarsystem zur Erkennung von Minen bekannt. Das Radarsystem nutzt Mikrowellenstrahlung und weist eine Sendeantenne und zwei Empfangsantennen auf, die oberhalb der Fahrerkabine in Fahrtrichtung auf den Boden gerichtet sind.

Aus der US 2010 / 256 835 A1 ist ein Verfahren zur Steuerung der Geschwindigkeit eines Fahrzeuges bekannt, wobei ein Radarsystem und ein Kamerasystem zur Bestimmung des Abstandes zwischen Fahrzeugen genutzt wird.

Aus der US 2012 / 062 407 A1 ist ein System zur Erkennung von explosiven Stoffen und einem Fahrzeug bekannt. Ein bemanntes Fahrzeug weist dabei einen Bodenradar auf. Das bemannte Fahrzeug folgt dabei einem unbemannten Führungsfahrzeug. Das unbemannte Fahrzeug weist einen Reflektor auf, wobei das bemannte Fahrzeug mittels des Radars Signale an den Reflektor sendet und damit einen Bodenbereich untersucht wird.

Der Erfindung liegt nun die Aufgabe zugrunde, das unbemannte Führungsfahrzeug zu verbessern.

Diese der Erfindung zugrunde liegende Aufgabe wird nun durch ein unbemanntes Führungsfahrzeug mit den Merkmalen des unabhängigen Patentanspruchs gelöst.

Mittels des unbemannten Führungsfahrzeugs einer Fahrzeugkolonne werden mit einem Bodenradar Minen detektiert und Informationen zur Umfahrung der Minen werden mittels des Bodenradars an ein nachfolgendes Fahrzeug, das sogenannte Folgefahrzeug, gesendet. Hierdurch ist ein unbemanntes Führungsfahrzeug zur sicheren Navigation einer Fahrzeugkolonne durch ein Minenfeld und ein entsprechendes Verfahren offenbart. Das unbemannte Führungsfahrzeug ist dazu geeignet, die Fahrzeugkolonne zu führen. Hierdurch besteht eine Datenverbindung zwischen dem Führungsfahrzeug und dem mindestens einen Folgefahrzeug. Die Datenverbindung ist radarbasiert. Hierzu wird ein Radarsignal von dem unbemannten Führungsfahrzeug ausgesandt, wobei das Radarsignal Dateninformationen aufweist. Die Dateninformationen sind auf einem Radarträgersignal aufmoduliert. Das Folgefahrzeug weist einen Radarsensor auf, der dazu geeignet ist, das von dem Führungsfahrzeug ausgesandte Radarsignal zu empfangen. Das Radarsignal wird von einer Auswerteeinheit des Folgefahrzeugs dekodiert und die Dateninformationen werden extrahiert.

Die Erfindung hat den Vorteil, dass bei einer Nichterkennung einer Mine nur das unbemannte Führungsfahrzeug betroffen ist. Eine effiziente kombinierte Nutzung des Bodenradars als Detektor und als Datensender ist daher möglich. Es ist keine Funkverbindung oder andere Kommunikationsmethode zwischen den Fahrzeugen notwendig. Es ist jedoch möglich, dass eine Funkverbindung oder eine andere Kommunikationsmethode zwischen den Folgefahrzeugen besteht.

Das Datensignal umfasst insbesondere Informationen bezüglich der Position des Führungsfahrzeugs und/oder bezüglich der Position von erkannten Minen und/oder bezüglich einer vorgeschlagenen Route.

Es ist denkbar, dass die Route durch das Minenfeld von einer Boardelektronik mit einem Speicher, einem Prozessor und einer entsprechenden Software des Führungsfahrzeugs festgelegt wird. In alternativer Ausgestaltung kann jedoch auch die Route durch eine Bordelektronik des Folgefahrzeugs automatisch bestimmt werden. In weiterer Ausgestaltung ist es denkbar, dass die Route von einem Bediener des Folgefahrzeugs festgelegt wird.

Mittels des Bodenradars des Führungsfahrzeugs werden Objekte auf oder im Untergrund der vorausliegenden Fahrstrecke detektiert. Hierzu wird mit dem Bodenradar des Führungsfahrzeugs zumindest ein Teil der vorausberechneten Fahrstrecke detektiert. Die Sensordaten des Bodenradars dienen ferner zur Detektion der Objekte, die ggf. als Sprengsatz oder als Nicht-Sprengsatz klassifiziert werden. Die entsprechenden detektierten Objekte werden mittels einer Auswerte- und/oder Steuerungseinheit analysiert und ggf. als Sprengsatz klassifiziert und in Abhängigkeit von der Klassifikation als Sprengsatz wird das unbemannte Fahrzeug auf eine der Mine ausweichenden Fahrstrecke gesteuert. Zur Erkennung und Klassifikation der Objekte werden die Daten des Bodenradars mit vorhandenen Vergleichsdaten bekannter Minentypen aus einer Datenbank verglichen. Bei Erkennung einer bekannten Mine aus der Datenbank steuert das Führungsfahrzeug mittels der Auswerte- und Steuerungseinheit in sicherem Abstand an der Mine vorbei.

Mittels des Bodenradars werden Daten betreffend der Position des Führungsfahrzeugs erzeugt. Zusätzlich kann die Position des Führungsfahrzeugs mittels eines GPS-Sensors bestimmt werden. Ferner wird durch das Bodenradar die Topographie der Fahrstrecke und/oder die Beschaffenheit des Untergrunds erfasst. Diese Daten, nämlich die Position des Fahrzeugs und/oder die detektierten Objekte und/oder die Topographie der Fahrstrecke und/oder die Beschaffenheit des Untergrunds werden an ein Folgefahrzeug gesendet. Diese Daten werden über die Radarverbindung zu dem Folgefahrzeug gesendet.

Die Informationen zur Position des Fahrzeugs und/oder der Minen und/oder der Topographiedaten der Fahrstrecke werden mittels des Bodenradars an ein nachfolgendes Fahrzeug gesendet. Dazu werden die Informationen dem Sendesignal des Bodenradars aufmoduliert. Die gesendeten Daten werden fortlaufend gesendet, so dass das Folgefahrzeug die genaue Fahrstrecke des Führungsfahrzeugs erhält. Die Positionsangaben können absolute oder relative Positionsangaben umfassen. Alternativ oder zusätzlich können die Daten auch eine Karte der Beschaffenheit des Untergrunds zeigen, die detektierten Objekte im oder auf dem Untergrund, wobei anhand dieser Daten das Folgefahrzeug selbstständig navigieren kann. Dazu nutzt das Folgefahrzeug ein eigenes Bodenradar, um selbst den Untergrund zu erfassen, mit der gesendeten Karte des Führungsfahrzeugs zu vergleichen und dadurch eigenständig die eigene Position zu bestimmen, zu navigieren und den Minen auszuweichen.

Die Daten können bei größeren Konvois auch von einem Folgefahrzeug zum nächsten Folgefahrzeug per Radar weitergesendet werden. Vorzugsweise weisen alle Folgefahrzeuge ein entsprechendes Bodenradar auf.

Bevorzugt handelt es sich bei dem Radar um ein AESA (Active Electronically Scanned Array) - Radarpanel. Das Bodenradar ist am Unterboden des Fahrzeugs derart angeordnet, dass das Detektionsfeld um 360° um das Fahrzeug herumreicht.

Vorzugsweise kann das Bodenradar auch um eine horizontale Position schwenkbar ausgeführt sein, so dass eine weitere Abstrahlung des Radarfelds erreicht werden kann. Es ist denkbar, das Bodenradar derart schwenkbar auszuführen, dass es nun in eine schräg zum Boden stehende Position schwenkbar ist. Die Schwenkbarkeit ist insbesondere dann sinnvoll, wenn der Abstand zum nächsten Folgefahrzeug groß ist und dieses ohne Schwenken nicht vom Radarfeld erreicht werden würde.

In einer weiteren Ausführung kann das Bodenradar auch aus mehreren Radaren bestehen, welche verschiedene Richtungen abdecken und bevorzugt in einem Winkel zwischen 0° und 60° bezogen auf den Horizont zum Boden hin abstrahlen.

Das Verfahren dient insbesondere zum Navigieren einer Fahrzeugkolonne durch ein Minenfeld. Mittels des Bodenradars werden unbekannte Objekte auf einer vorausliegenden Fahrstrecke und vorzugsweise in der Umgebung detektiert. Die aufgenommenen Daten werden von dem Führungsfahrzeug an das mindestens eine Folgefahrzeug gesendet. Die Daten werden mittels des Bodenradars an das Folgefahrzeug gesendet.

Das Folgefahrzeug detektiert mit einem Bodenradar ebenfalls die Fahrstrecke. Die Position des Folgefahrzeugs wird anhand eines Vergleiches der gemessenen Daten des Bodenradars des Folgefahrzeugs und der vom Führungsfahrzeug empfangenen Daten bestimmt. Hierdurch kann eine genauere Positionsbestimmung als mit GPS-erreicht werden.

Im Folgenden wird nun eine bevorzugte Ausgestaltung der Erfindung anhand der Zeichnung und der dazugehörigen Beschreibung näher erläutert. In der Zeichnung zeigt:
- Fig.1: in einer schematischen Darstellung eine Fahrzeugkolonne mit einem unbemannten Führungsfahrzeug und zwei Folgefahrzeugen, wobei sich die Fahrzeugkolonne entlang einer Fahrstrecke durch ein Minenfeld bewegt, sowie

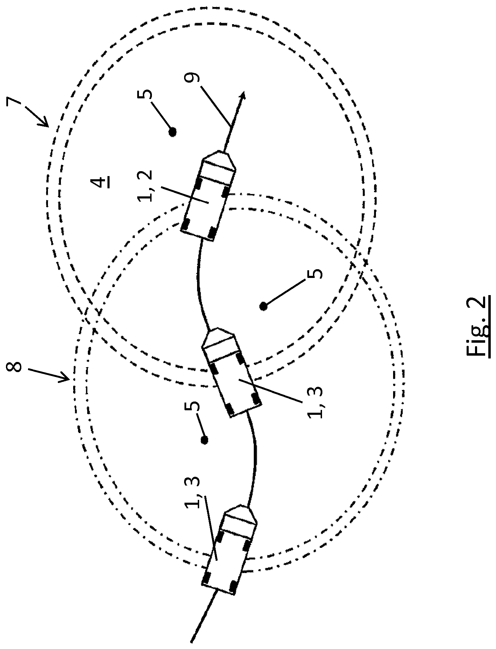

- Fig. 2: in einer schematischen Draufsicht die Fahrzeugkolonne.

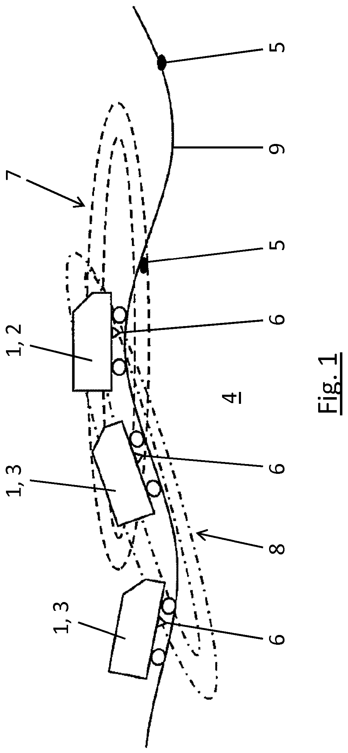

In Fig. 1 ist eine Fahrzeugkolonne 1 mit einem unbemannten Führungsfahrzeug 2 und zwei Folgefahrzeugen 3 gut zu erkennen. Die Fahrzeugkolonne 1 bewegt sich durch ein Minenfeld 4 mit mehreren Minen 5. Das Führungsfahrzeug 2 und vorzugsweise auch die Folgefahrzeuge 3 weisen jeweils einen Bodenradar 6 auf. Das Bodenradar 6 weist einen Erfassungsbereich 7, 8 auf. Dargestellt ist der Erfassungsbereich 7 des Führungsfahrzeugs 2 und der Erfassungsbereich 8 des Bodenradars 6 des Folgefahrzeugs 3. Zur sicheren Navigation der Fahrzeugkolonne 1 durch das Minenfeld 4 dient das vorausfahrende unbemannte Führungsfahrzeug 2. Dieses ist mit dem Bodenradar 6 zur Detektion von Objekten, insbesondere der Minen 5 auf der Fahrstrecke 9 ausgestattet. Die Fahrstrecke 9 wird dabei so gewählt, dass ein Kontakt des Führungsfahrzeugs 2 und der Folgefahrzeuge 3 mit den Minen 5 vermieden wird.

Mittels einer nicht dargestellten Auswerte- und Steuerungseinheit können Objekte entlang der Fahrstrecke 9 nämlich insbesondere in den Erfassungsbereichen 7, 8 analysiert werden und hierdurch Minen 5 erkannt werden. Zur Erkennung der Minen werden die Daten des Bodenradars 6 mit vorhandenen Vergleichsdaten bekannter Minentypen aus einer Datenbank verglichen. Die Datenbank ist insbesondere in der Auswerte- und Steuerungseinheit des Führungsfahrzeugs 2 gespeichert. Vorzugsweise weisen alle Fahrzeuge, nämlich auch die Folgefahrzeuge 3 eine entsprechende Auswerte- und Steuerungseinheit mit entsprechenden Vergleichsdaten auf.

Bei Erkennung einer bekannten Mine aus der Datenbank wird das Fahrzeug, nämlich hier insbesondere das Führungsfahrzeug 2 und auch die Folgefahrzeuge 3 an der Mine 5 vorbei navigiert. Die Informationen zur Position des Führungsfahrzeugs 2 und/oder der Minen 5 und/oder die Topographiedaten der Fahrstrecke werden mittels des Bodenradars 6 an ein nachfolgendes Fahrzeug gesendet. Dazu werden die Informationen dem Sendesignal des Bodenradars 6 aufmoduliert.

Die Daten werden fortlaufend gesendet, so dass das Folgefahrzeug 3 die genaue Fahrstrecke 9 des Führungsfahrzeugs 2 erhält. Die Folgefahrzeuge 3 erfassen mit dem Bodenradar 6 das Radarsignal des Führungsfahrzeugs 2. Ferner werden vorzugsweise mit dem Bodenradar 6 und der Folgefahrzeuge 3 ebenfalls die Topographiedaten der Fahrstrecke 9 erfasst. Die Positionsangaben können absolute oder relative Positionsangaben sein.

Alternativ oder zusätzlich können die Daten auch eine Karte der Beschaffenheit des Untergrunds umfassen, welche die detektierten Objekte in oder auf dem Untergrund umfasst, anhand deren das Folgefahrzeug 3 selbstständig navigieren kann. Dazu nutzt das Folgefahrzeug 3 ein eigenes Bodenradar 6, um selbst den Untergrund zu erfassen und die aufgenommenen Daten mit der gesendeten Karte des Führungsfahrzeugs 2 zu vergleichen und dadurch eigenständig zu navigieren und den Minen 5 auszuweichen. Die Daten können bei größeren Fahrzeugkolonnen 1 auch von einem Fahrzeug zum nächsten Radar weitergesendet werden. Bevorzugt handelt es sich bei dem Radar um ein AESA (Active Electronically Scanned Array) Radar.

Das Bodenradar 6 ist am Untergrund des Führungsfahrzeugs 2 bzw. am Untergrund des Folgefahrzeugs 3 derart angeordnet, dass das Detektionsfeld um 360° um das Fahrzeug herumreicht.

Vorzugsweise ist das Bodenradar 6 schwenkbar, so dass sich auch bei ansteigendem Gelände das Bodenradar 6 in eine horizontale Position schwenken lässt, so dass eine weitere Abstrahlung des Radars erreicht werden kann. Ferner kann durch das Schwenken erreicht werden, wenn der Abstand zu dem Folgefahrzeug 3 groß ist und dieses sonst nicht vom Radarfeld erreicht werden würde, dass das Bodenradar 6 zum Folgefahrzeug 3 hingeschwenkt wird. In einer weiteren Ausführung kann das Bodenradar 6 auch aus mehreren Radaren bzw. Radarsensoren bestehen, welche verschiedene Ausrichtungen abdecken und bevorzugt in einem Winkel zwischen 0° und 60° bezogen auf den Horizont zum Boden hin abstrahlen. In einer nicht beanspruchten Variante können die Bodenradare 6 alternativ auch an den Seiten des Fahrzeugs 2, 3 oder auf dem Fahrzeug 2, 3 angeordnet sein.

### Bezugszeichenliste:

- 1: Fahrzeugkolonne
- 2: Führungsfahrzeug
- 3: Folgefahrzeug
- 4: Minenfeld
- 5: Mine
- 6: Bodenradar
- 7: Erfassungsbereich
- 8: Erfassungsbereich
- 9: Fahrstrecke

## Patentansprüche

1. Unbemanntes Fahrzeug (2) mit einem Bodenradar (6) und mit einer Auswerte- und Steuerungseinheit, wobei mittels des Bodenradars (6) unbekannte Objekte auf einer vorausliegenden Fahrstrecke (9) auf oder im Untergrund detektierbar sind, wobei mittels des Bodenradars (6) Minen (5) detektierbar sind, **dadurch gekennzeichnet, dass** der Bodenradar (6) am Unterboden des Fahrzeugs (2) derart angeordnet ist, dass das Detektionsfeld 360° um das Fahrzeug herumreicht, wobei das Fahrzeug (2) als Führungsfahrzeug ausgebildet ist, wobei das Führungsfahrzeug (2) zur Führung einer Fahrzeugkolonne (1) mit weiteren Folgefahrzeugen (3) ausgebildet ist, wobei Daten von dem Führungsfahrzeug (2) an das mindestens eine Folgefahrzeug (3) sendbar sind, wobei die Daten mittels des Bodenradars (6) an das Folgefahrzeug (3) sendbar sind.

2. Unbemanntes Führungsfahrzeug nach Anspruch 1, **dadurch gekennzeichnet, dass** die Auswerte- und Steuerungseinheit Vergleichsdaten bekannter Minentypen aufweist, wobei die Daten des Bodenradars (6) mittels der Auswerte- und Steuerungseinheit mit den Vergleichsdaten verglichen werden, wobei bei Erkennung einer Mine aus der Datenbank das Führungsfahrzeug (2) mittels der Auswerte- und Steuerungseinheit an der Mine (5) vorbei navigierbar ist.

3. Unbemanntes Führungsfahrzeug nach einem der vorstehenden Ansprüche, **dadurch gekennzeichnet, dass** Informationen zur Position des unbemannten Führungsfahrzeugs (2) und/oder der Minen (5) und/oder Topographiedaten der Fahrstrecke (9) und/oder der Beschaffenheit des Untergrunds mittels des Bodenradars (6) an das Folgefahrzeug (3) sendbar sind.

4. Unbemanntes Führungsfahrzeug nach einem der vorstehenden Ansprüche, **dadurch gekennzeichnet, dass** mittels der Auswerte- und Steuerungseinheit die Daten dem Sendesignal des Bodenradars (6) aufmodulierbar sind.

5. Fahrzeugkolonne mit einem unbemannten Führungsfahrzeug gemäß einem der vorstehenden Ansprüche und mit mindestens einem Folgefahrzeug (3), wobei das Folgefahrzeug (3) einen Bodenradar (6) aufweist.

6. Fahrzeugkolonne (1) nach Anspruch 5, **dadurch gekennzeichnet, dass** das Führungsfahrzeug (2) und/oder das Folgefahrzeug (3) einen Bodenradar (6) in Form mindestens eines AESA-Radarpanels aufweist.

7. Fahrzeugkolonne nach einem der vorstehenden Ansprüche 5 oder 6, **dadurch gekennzeichnet, dass** das Bodenradar (6) des Führungsfahrzeugs (2) und/oder das Bodenradar (6) des Folgefahrzeugs (3) schwenkbar am Führungsfahrzeug (2) und/oder schwenkbar am Folgefahrzeug (3) angeordnet ist / sind.

8. Fahrzeugkolonne nach einem der vorstehenden Ansprüche 5 bis 7, **dadurch gekennzeichnet, dass** das Bodenradar (6) durch mehrere Radarpanele oder mehrere Radarsensoren gebildet sind.

9. Fahrzeugkolonne nach einem der vorstehenden Ansprüche 5 bis 8, **dadurch gekennzeichnet, dass** das Bodenradar (6) in einem Winkel zwischen 0° und 60° bezogen auf den Horizont zum Boden hin abstrahlt.

10. Verfahren zum Navigieren einer Fahrzeugkolonne (1) durch ein Minenfeld, wobei ein unbemanntes Führungsfahrzeug (2) nach einem der vorstehenden Ansprüche 1 bis 4 mit dem Bodenradar (6) und mit der Auswerte- und Steuerungseinheit ausgestattet ist, wobei mittels des Bodenradars (6) unbekannte Objekte auf einer vorausliegenden Fahrstrecke (9) auf oder im Untergrund detektiert werden, wobei mittels des Bodenradars (6) Minen (5) detektiert werden, wobei Daten von dem Führungsfahrzeug (2) an das mindestens eine Folgefahrzeug (3) gesendet werden, wobei die Daten mittels des Bodenradars (6) an das Folgefahrzeug (3) gesendet werden.

11. Verfahren nach dem vorstehenden Anspruch, **dadurch gekennzeichnet, dass** das Folgefahrzeug (3) mit einem Bodenradar (6) ebenfalls die Fahrstrecke (9) detektiert und die Position des Folgefahrzeugs (3) anhand eines Vergleiches der gemessenen Daten des Bodenradars (6) des Folgefahrzeugs (3) und der vom Führungsfahrzeug (2) empfangenen Daten bestimmt wird.

## Claims

1. Unmanned vehicle (2) having a ground radar (6) and having an evaluation and control unit, wherein unknown objects on or in the surface underneath on a driving route (9) ahead are detectable by means of the ground radar (6), wherein mines (5) are detectable by means of the ground radar (6), **characterized in that** the ground radar (6) is arranged on the underbody of the vehicle (2) in such a way that the detection field extends 360° around the vehicle, wherein the vehicle (2) is designed as a lead vehicle, wherein the lead vehicle (2) is designed for leading a vehicle convoy (1) with further following vehicles (3), wherein data are transmittable from the lead vehicle (2) to the at least one following vehicle (3), wherein the data are transmittable to the following vehicle (3) by means of the ground radar (6).

2. Unmanned lead vehicle according to Claim 1, **characterized in that** the evaluation and control unit has comparative data of known mine types, wherein the data of the ground radar (6) are compared with the comparative data by means of the evaluation and control unit, wherein when a mine from the database is recognized, the lead vehicle (2) is able to be navigated past the mine (5) by means of the evaluation and control unit.

3. Unmanned lead vehicle according to either of the preceding claims, **characterized in that** information on the position of the unmanned lead vehicle (2) and/or the mines (5) and/or topography data of the driving route (9) and/or the constitution of the surface underneath can be transmitted to the following vehicle (3) by means of the ground radar (6).

4. Unmanned lead vehicle according to any of the preceding claims, **characterized in that** the data can be modulated on the transmission signal of the ground radar (6) by means of the evaluation and control unit.

5. Vehicle convoy comprising an unmanned lead vehicle according to any of the preceding claims and comprising at least one following vehicle (3), wherein the following vehicle (3) comprises a ground radar (6).

6. Vehicle convoy (1) according to Claim 5, **characterized in that** the lead vehicle (2) and/or the following vehicle (3) comprise(s) a ground radar (6) in the form of at least one AESA radar panel.

7. Vehicle convoy according to either of the preceding Claims 5 and 6, **characterized in that** the ground radar (6) of the lead vehicle (2) and/or the ground radar (6) of the following vehicle (3) are/is arranged pivotably on the lead vehicle (2) and/or pivotably on the following vehicle (3).

8. Vehicle convoy according to any of the preceding Claims 5 to 7, **characterized in that** the ground radar (6) is formed by a plurality of radar panels or a plurality of radar sensors.

9. Vehicle convoy according to any of the preceding Claims 5 to 8, **characterized in that** the ground radar (6) radiates towards the ground at an angle of between 0° and 60° relative to the horizon.

10. Method for navigating a vehicle convoy (1) through a minefield, wherein an unmanned lead vehicle (2) according to any of the preceding Claims 1 to 4 is equipped with the ground radar (6) and with the evaluation and control unit, wherein unknown objects on or in the surface underneath on a driving route (9) ahead are detected by means of the ground radar (6), wherein mines (5) are detected by means of the ground radar (6), wherein data are transmitted from the lead vehicle (2) to the at least one following vehicle (3), wherein the data are transmitted to the following vehicle (3) by means of the ground radar (6).

11. Method according to the preceding claim, **characterized in that** the following vehicle (3) with a ground radar (6) likewise detects the driving route (9) and the position of the following vehicle (3) is determined on the basis of a comparison of the measured data of the ground radar (6) of the following vehicle (3) and the data received from the lead vehicle (2).

## Revendications

1. Véhicule sans pilote (2) doté d'un radar de sol (6) et d'une unité d'évaluation et de commande, dans lequel des objets inconnus sur un parcours (9) situé vers l'avant peuvent être détectés sur ou dans le sous-sol au moyen du radar de sol (6), des mines (5) pouvant être détectées au moyen du radar de sol (6), **caractérisé en ce que** le radar de sol (6) est disposé sur le dessous de carrosserie du véhicule (2) de telle sorte que le champ de détection s'étende sur 360° autour du véhicule, le véhicule (2) étant conçu en tant que véhicule de guidage, le véhicule de guidage (2) étant conçu pour guider un convoi de véhicules (1) comprenant d'autres véhicules suiveurs (3), des données pouvant être transmises par le véhicule de guidage (2) audit au moins un véhicule suiveur (3), les données pouvant être transmises au véhicule suiveur (3) au moyen du radar de sol (6).

2. Véhicule sans pilote de guidage selon la revendication 1, **caractérisé en ce que** l'unité d'évaluation et de commande comporte des données de comparaison de types de mines connus, les données du radar de sol (6) étant comparées aux données de comparaison au moyen de l'unité d'évaluation et de commande, le véhicule de guidage (2) pouvant être amené à naviguer pour contourner la mine (5) au moyen de l'unité d'évaluation et de commande lors de l'identification d'une mine de la base de données.

3. Véhicule sans pilote de guidage selon l'une des revendications précédentes, **caractérisé en ce que** des informations concernant la position du véhicule sans pilote de guidage (2) et/ou des mines (5) et/ou des données topographiques du parcours (9) et/ou de la nature du sous-sol peuvent être transmises au véhicule suiveur (3) au moyen du radar de sol (6).

4. Véhicule sans pilote de guidage selon l'une des revendications précédentes, **caractérisé en ce que** les données peuvent être modulées sur le signal d'émission du radar de sol (6) au moyen de l'unité d'évaluation et de commande.

5. Convoi de véhicules comprenant un véhicule sans pilote de guidage selon l'une des revendications précédentes et au moins un véhicule suiveur (3), le véhicule suiveur (3) comportant un radar de sol (6).

6. Convoi de véhicules (1) selon la revendication 5, **caractérisé en ce que** le véhicule de guidage (2) et/ou le véhicule suiveur (3) comporte un radar de sol (6) sous la forme d'au moins un panneau radar AESA.

7. Convoi de véhicules selon l'une des revendications 5 ou 6 précédentes, **caractérisé en ce que** le radar de sol (6) du véhicule de guidage (2) et/ou le radar de sol (6) du véhicule suiveur (3) est/sont disposé(s) de manière orientable sur le véhicule de guidage (2) et/ou de manière orientable sur le véhicule suiveur (3).

8. Convoi de véhicules selon l'une des revendications précédentes 5 à 7, **caractérisé en ce que** le radar de sol (6) est formé par plusieurs panneaux radars ou plusieurs capteurs radars.

9. Convoi de véhicules selon l'une des revendications 5 à 8 précédentes, **caractérisé en ce que** le radar de sol (6) émet vers le sol selon un angle compris entre 0° et 60° par rapport à l'horizon.

10. Procédé de navigation d'un convoi de véhicules (1) à travers un champ de mines, un véhicule sans pilote de guidage (2) selon l'une des revendications 1 à 4 précédentes étant équipé du radar de sol (6) et de l'unité d'évaluation et de commande, dans lequel des objets inconnus sur un parcours (9) situé vers l'avant sont détectés au moyen du radar de sol (6), des mines (5) étant détectées au moyen du radar de sol (6), des données étant transmises du véhicule de guidage (2) audit au moins un véhicule suiveur (3), les données étant transmises au véhicule suiveur (3) au moyen du radar de sol (6).

11. Procédé selon la revendication précédente, **caractérisé en ce que** le véhicule suiveur (3) détecte également le parcours (9) au moyen d'un radar de sol (6) et **en ce que** la position du véhicule suiveur (3) est déterminée sur la base d'une comparaison des données mesurées par le radar de sol (6) du véhicule suiveur (3) aux données reçues du véhicule de guidage (2).
